# EUROPÄISCHE PATENTSCHRIFT

(11) **EP 0 802 348 B1**
(45) Veröffentlichungstag und Bekanntmachung des Hinweises auf die Patenterteilung: **28.02.2001**
(21) Anmeldenummer: 97104375.7
(22) Anmeldetag: 14.03.1997
(51) Int. Cl.: F16H 1/16

(54) **Getriebe-Einheit**
Transmission unit
Ensemble de transmission

(30) Priorität: 16.04.1996 DE 19615007
(43) Veröffentlichungstag der Anmeldung: 22.10.1997
(73) Patentinhaber: MEKRA Lang GmbH & Co. KG, 90765 Fürth (DE)
(72) Erfinder: Lang, Heinrich, 91465 Ergersheim (DE); Seiboth, Wolfgang, 91438 Bad Windsheim (DE)
(74) Vertreter: Rau, Manfred, Dr. Dipl.-Ing.

(56) Entgegenhaltungen:
- EP-A- 0 545 197
- WO-A-91/04172
- WO-A-94/14633
- DE-A- 3 741 615

## Beschreibung

Die Erfindung betrifft eine Getriebe-Einheit nach dem Oberbegriff des Anspruches 1.

Derartige Getriebe-Einheiten werden in der Regel als Motor-Getriebe-Einheiten ausgebildet, d.h. in einem Gehäuse ist einerseits ein Elektromotor und andererseits ein diesem nachgeordnetes mehrstufiges Untersetzungs-Getriebe angeordnet. Derartige Motor-Getriebe-Einheiten werden beispielsweise als Stellmotoren bei Außenspiegeln von Kraftfahrzeugen, insbesondere bei Außenspiegeln von Lastkraft-Fahrzeugen, eingesetzt. Sie sind also verhältnismäßig klein und dienen nur zur Übertragung kleiner Drehmomente.

Bei einer bekannten Getriebe-Einheit der gattungsgemäßen Art ist das Schneckenrad auf einem Zapfen des ersten Gehäuseteils drehbar gelagert; das Abtriebsteil ist im zweiten Gehäuseteil radial unter Zwischenschaltung eines Lagerrings gelagert Die übrigen Getriebeteile zwischen dem Schnekkenrad und dem Abtriebsteil sind im wesentlichen selbstzentrierend ausgebildet. Die Montage dieser Getriebe-Einheit ist mit einigem Aufwand verbunden. Im übrigen ist die Getriebe-Einheit verschleißanfällig.

Eine gattungsgemäße Getriebe-Einheit ist aus der DE 37 41 615 A1 bekannt. Bei dieser ist in einem Getriebegehäuse mittig eine Achse angeordnet, die die Lagerung für ein über eine Schnecke angetriebenes Schneckenrad und ein Planetengetriebe bildet. Das Getriebegehäuse ist durch ein mit dem Planetengetriebe zusammengewirkendes Hohlrad verschlossen, das über einen Abschlußring nur in axialer Richtung festgelegt ist. Die Getriebe-Einheit dient der Verschwenkung eines Scherenabtriebsarmes für den Fensterheber eines Kraftfahrzeugs, d. h. der Scherenabtriebsarm wird in einer Ebene verschwenkt. Das Hohlrad ist gegenüber dem Getriebegehäuse, nicht jedoch gegenüber dem Abschlußring radial gelagert. Darüber hinaus ist die Achse im Getriebegehäuse nicht in zur Aufnahme von Biegemomenten geeigneter Weise festgelegt.

Der Erfindung liegt die Aufgabe zugrunde, eine Getriebe-Einheit der gattungsgemäßen Art so auszugestalten, daß es verschleiß- und reibungsarm läuft und leicht zu montieren ist.

Diese Aufgabe wird erfindungsgemäß durch die Merkmale im Kennzeichnungsteil des Anspruches 1 gelöst. Die Achse dient dazu, die in dem mehrstufigen Untersetzungs-Getriebe auftretende Biegekräfte, also insbesondere vom Schneckenrad her auftretende Biegekräfte, aufzunehmen, die sich über die volle Länge des mehrstufigen Untersetzungs-Getriebes erstreckt und beidendig gelagert ist. Dadurch, daß Biegekräfte von dieser Achse aufgenommen werden, kommen sie nicht in den Bereich der zahlreichen Zahnräder, wodurch einerseits keine über die normale Reibung hinausgehenden Reibungskräfte auftreten und auch ein hierdurch bewirkter Verschleiß vermieden wird. Die Montage wird erleichtert, weil alle Bauteile des Untersetzungs-Getriebes über die Achse aufgeschoben werden.

Die Ansprüche 2 und 3 geben vorteilhafte Ausgestaltungen der Befestigung bzw. Lagerung der Achse und ihrer Ausbildung selbst wieder.

Die Ansprüche 4 bis 6 geben hiermit im Zusammenhang stehende weitere vorteilhafte Ausgestaltungen der Getriebe-Einheit wieder.

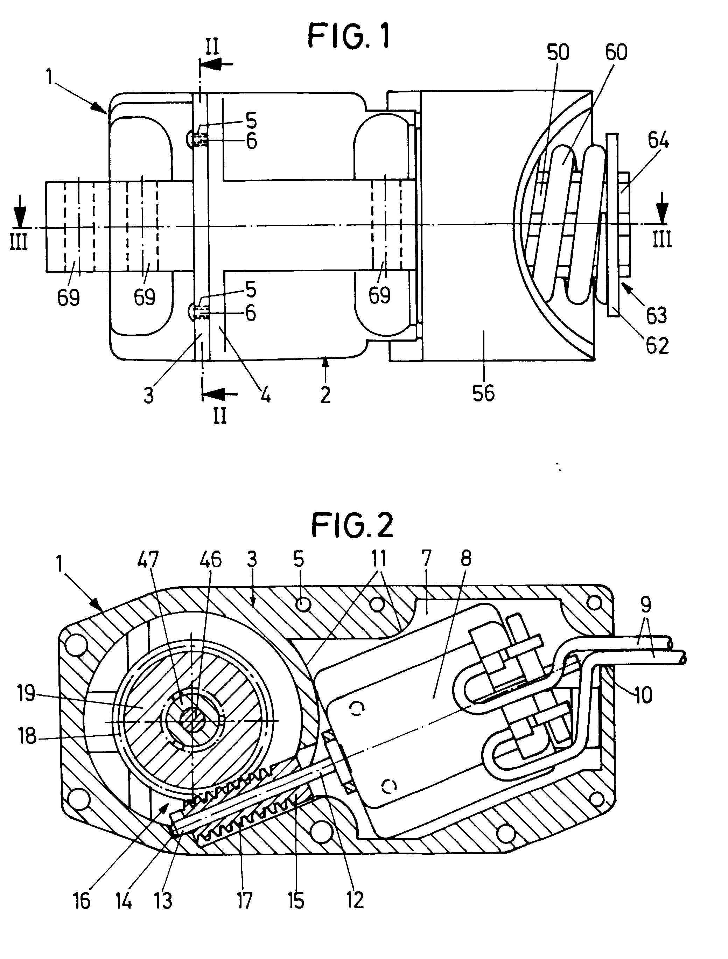

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: eine Seitenansicht einer Motor-Getriebe-Einheit entsprechend den Sichtpfeilen I in der Fig. 2 und 3,
- Fig. 2: einen Querschnitt durch die Motor-Getriebe-Einheit gemäß der Schnittlinie II-II in Fig. 3,
- Fig. 3: einen Querschnitt durch die Motor-Getriebe-Einheit gemäß der Schnittlinie III-III in Fig. 1,
- Fig. 4: eine Längsansicht eines Abtriebs-Hohlrades,
- Fig. 5: eine Stirnansicht des Abtriebs-Hohlrades entsprechend dem Sichtpfeil V in Fig. 4, und
- Fig. 6: eine Draufsicht auf eine Widerlager-Ringscheibe.

Die in der Zeichnung dargestellte Motor-Getriebe-Einheit weist ein aus einem Gehäuseunterteil 1 und einem Gehäuseoberteil 2 bestehendes, aus einem schweißfähigen thermoplastischen Kunststoff gebildetes Gehäuse auf, wobei die beiden Gehäuseteile mit aneinanderlegbaren Flanschen 3, 4 versehen sind. Der dem Gehäuseunterteil 1 zugewandte Flansch 3 ist mit Zentrierlöchern 5 versehen, während am Flansch 4 des Gehäuseoberteils 2 diesen Zentrierlöchern 5 zugeordnete Zapfen 6 ausgebildet sind, die in die Zentrierlöcher 5 eingeführt und nach der Montage und dem Zusammenstekken des Gehäuseunterteils 1 und des Gehäuseoberteils 2 verschweißt werden, so daß sie gleichzeitig auch zur festen Verbindung von Gehäuseunterteil 1 und Gehäuseoberteil 2 dienen.

Das Gehäuse 1, 2 ist mit einem Aufnahmeraum 7 für einen Elektromotor 8 versehen, dessen elektrische Versorgungs-Leitungen 9 durch eine Öffnung 10 in den Aufnahmeraum 7 geführt werden. Der Motor 8 ist drehrichtungsumkehrbar, also in beiden möglichen Drehrichtungen antreibbar.Der Elektromotor 8 liegt im Aufnahmeraum 7 gegen im Gehäuse ausgebildete Anschläge 11 an, ist also mit dem Einlegen in das Gehäuseunterteil 1 bereits in seiner Lage ausgerichtet.

Der Elektromotor 8 ist mit einer aus dem Gehäuse 1, 2 frei vorragenden Welle 12 versehen, deren vom Elektromotor 8 entferntes freies Ende 13 in einer im Gehäuseunterteil 1 ausgeformten Lagerschale 14 abgestützt ist. Auf der aus Stahl bestehenden Welle 12 ist eine aus Kunststoff bestehende Zylinder-Schnecke 15 eines Schneckengetriebes 16 gegenüber der Welle 12 undrehbar, beispielsweise durch Preßsitz, angebracht.

Die schraubenförmige Verzahnung 17 der Schnecke 15 greift in eine entsprechend angepaßte Verzahnung 18 eines Schneckenrades 19 ein, das zusammen mit der Schnecke 15 das Schneckengetriebe 16 bildet.

Dem Schneckengetriebe 16 ist ein Planetengetriebe 20 nachgeordnet. Das Planetengetriebe 20 weist ein einstückig mit dem Schneckenrad 19 ausgebildetes, mit diesem also drehfest verbundenes Sonnenrad 21 auf, in dessen Außen-Verzahnung 22 drei Planetenräder 23, von denen nur eines dargestellt ist, mit ihrer entsprechenden Außen-Verzahnungen 24 eingreifen. Außerdem stützen die Planetenräder 23 sich an einem Hohlrad 25 ab, das mit einer Innen-Verzahnung 26 versehen ist, in die die jeweilige Außen-Verzahnung 24 der Planetenräder 23 eingreift. Das Hohlrad 25 ist gegenüber dem Gehäuse 1, 2 undrehbar, wozu es mit Vorsprüngen 27 an seinem Außenumfang versehen ist, die in angepaßte Ausnehmungen 28 im Gehäuse 1, 2 eingreifen. Die Planetenräder 23 sind auf Lagerzapfen 29 eines Steg-Unterteils 30 drehbar gelagert und werden dadurch in gleichen Winkelabständen zueinander gehalten.

Die Planetenräder 23 sind jeweils einstückig mit einem Zahnrad 32 eines Hohlrad-Getriebes 33 ausgebildet. Die Außenverzahnung dieser Zahnräder 32 des Hohlrad-Getriebes 33 greifen in eine Innen-Verzahnung 35 eines Abtriebs-Hohlrades 36 des Hohlrad-Getriebes 33 ein. In die Zahnräder 32 greift jeweils ein Lagerzapfen 37 eines Steg-Oberteils 38 ein. Das Steg-Unterteil 30 und das Steg-Oberteil 38 sind mittels am Steg-Unterteil 30 ausgebildeter Aufnahmeöffnungen 39 und in diese eingreifende, am Steg-Oberteil 38 ausgebildeter Verbindungszapfen 40 miteinander zu einem gehäuseartigen Steg miteinander verbunden.

Das Abtriebs-Hohlrad 36 weist einen einstückig mit diesem ausgebildeten zylindischen Lagerabschnitt 41 auf, der radial zur gemeinsamen Drehachse 42 des Schneckenrades 19, des Planetengetriebes 20 und des Hohlrad-Getriebes 33 in einer Lagerschale 43 gelagert ist, die am Gehäuseoberteil 3 ausgebildet ist. Das Abtriebs-Hohlrad 36 ist weiter in Richtung der Drehachse 42 relativ zum Gehäuseoberteil 2 durch sich radial zur Drehachse 42 erstreckende Anschlagflächen 44, 45 festgelegt, die die Drehung des Abtriebs-Hohlrades 36 nicht behindern, aber das Spiel, d.h. die Verschiebbarkeit des Hohlrades 36 in Richtung der Drehachse 42, auf etwa 0,1 mm beschränken.

Das Schneckengetriebe 16, das Planetengetriebe 20 und das Hohlradgetriebe 33 bilden ein Untersetzungsgetriebe.

Das Schneckenrad 19 ist auf einer durchgehenden zylindrischen Achse 46 aus Stahl gelagert, deren eines Ende in einer Aufnahme 47 im Gehäuseunterteil 1 mit Preßsitz, also gegenüber dem Gehäuseunterteil 1 undrehbar, gehalten ist. Das andere Ende der Achse 46 ist in einer zur Drehachse 42 konzentrischen, zylindrischen Ausnehmung 48 des Abtriebs-Hohlrades 36 radial zur Drehachse 42 weitgegehend spielfrei abgestützt, wobei aber die undrehbare Achse 46 die Drehung des Abtriebs-Hohlrades 46 nicht behindert. Das Schneckenrad 19 ist auf der Achse 46 frei drehbar gelagert und in Richtung der Drehachse 42 gegen die Stirnseite 49 der Aufnahme 47 in Richtung zum Gehäuseunterteil 1 abgestützt. In Richtung zum Abtriebs-Hohlrad 36 ist es axial am Hohlrad 25 des Planetengetriebes 20 abgestützt.

Das insgesamt aus Metall, beispielsweise Zink-Guß, bestehende Abtriebs-Hohlrad 36 weist einen sich an den Lagerabschnitt 41 anschließenden, im wesentlichen zylindrischen Abtriebsabschnitt 50 auf, der mindestens eine, bevorzugt aber zwei einander diametral zur Drehachse 42 gegenüberliegende parallel zur Drehachse 42 verlaufende Längsnuten 51 aufweist. Auf dem Abtriebs-Abschnitt 50 ist ein Reibring 52 einer Rutschkupplung 53 angeordnet, der mit je einem Vorsprung 54 in die Längsnuten 51 eingreift, wodurch eine drehfeste Verbindung zwischen dem Abtriebs-Hohlrad 36 und dem Reibring 52 hergestellt wird. Der Reibring 52 liegt gegen einen Ringbund 55 am Übergang vom Lagerabschnitt 41 zum Abtriebsabschnitt 51 in Richtung der Drehachse 42 fest an. Er bildet die oben bereits angesprochene Anschlagfläche 45.

Der Abtriebsabschnitt 50 ist von einem Abtriebs-Schwenkteil 56 umgeben, das eine parallel zur Drehachse 42 verlaufende Ausnehmung 57 aufweist, in die ein nicht dargestellter Bolzen eines zu verschwenkenden Teiles eingreifen kann. Das Abtriebs-Schwenkteil 56 weist eine Reibfläche 58 auf, die an einer Reibfläche 59 des Reibrings 52 anliegt. Beide Reibflächen 58, 59 sind kegelstumpfförmig ausgebildet und verjüngen sich vom Gehäuse-oberteil 2 weg unter einem halben Kegelöfinunpwhkel a. Es gilt 7° ≤ a ≤ 15° und bevorzugt a ≃ 10°.

Das Abtriebs-Schwenkteil 56 wird mittels einer vorgespannten Schrauben-Druckfeder 60 in Richtung zum Reibring 52 gedrückt, wobei vom Schwenkteil 56 und dem Reibring 52 nur die Reibflächen 58, 59 aneinanderliegen. Zwischen diesen beiden Teilen wird also die erwähnte Rutschkupplung 53 gebildet, deren Rutsch-Moment durch den Reibungskoeffizienten zwischen der Reibfläche 59 des Reibrings 52 und der Reibfläche 58 des Schwenkteils 56 und durch die normal - also senkrecht - zu den Reibflächen 58, 59 wirkende Kraft und den mittleren Durchmesser d der Reibfläche 58, 59 bestimmt wird. Die zwischen den Reibflächen 58, 59 senkrecht zu ihnen wirkende Kraft ist bei einer vorgegebenen Kraft der Druckfeder 60 in Richtung der Drehachse 42 umso größer, je kleiner der halbe Kegelöffnungswinkel a der Reibflächen 58, 59 ist. Die senkrecht zu den Reibflächen 58, 59 zwischen diesen wirkenden Kraft ist auf auf jeden Fall um ein Mehrfaches größer, also die Kraft der Druckfeder 60. Es kommt hinzu, daß der Reibring 52 aus Metall, beispielsweise aus Zink-Guß, besteht, während das Abtriebs-Schwenkteil 56 aus einem gängigen Kunststoff besteht.

Die Schrauben-Druckfeder 60 liegt unter Zwischenschaltung einer als Druckscheibe 61 dienenden Ringscheibe gegen das Abtriebs-Schwenkteil 56 an. Diese Druckscheibe 61 ist ebenfalls in den Längsnuten 51 mittels Vorsprüngen 54 drehfest zum Abtriebs-Hohlrad 36 festgelegt. Das zwischen der Druckscheibe 61 und dem Schwenkteil 56 wirkende Reibmoment ist mindestens um den Quotienten 10 kleiner als das Rutschmoment der Rutschkupplung 53.

Die Druckfeder 60 liegt weiterhin im Bereich des freien Endes 64 des Abtriebsabschnitts 50 gegen eine weitere, als Widerlager 62 dienende Ringscheibe an, die mit dem Abtriebsabschnitt 50 mittels eines Bajonettverschlusses 63 verriegelt ist. Die beiden Ringscheiben bestehen aus Metall, beispielsweise Stahl. Sie sind identisch ausgebildet und weisen den Längsnuten 51 angepaßte Vorsprünge 54 auf, die im Querschnitt identisch den Vorsprüngen 54 am Reibring 52 sind.

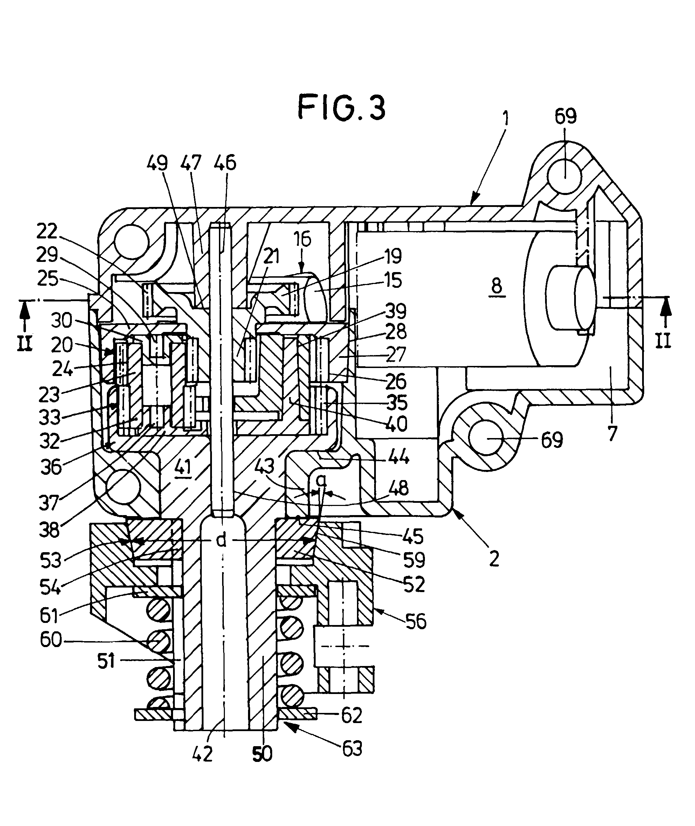

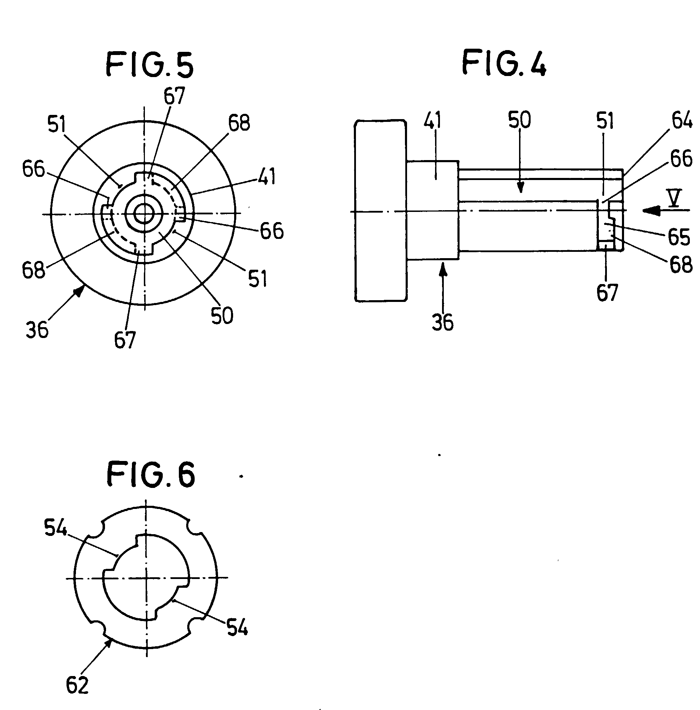

Wie aus den Fig. 4 bis 6 in Verbindung mit Fig. 3 hervorgeht, ist zur Erzeugung des Bajonettverschlusses 63 im Bereich des freien Endes 64 des Abtriebs-Hohlrades 36 an dessen Abtriebsabschnitt 50 jeweils eine Teil-Umfangsnut 65 ausgebildet, die einseitig aus einer Längsnut 51 herausführt. Jede Teil-Umfangsnut 65 ist also an einem Ende 66 zu einer Längsnut 51 offen. Dagegen ist sie am anderen Ende 67 zu der jeweils anderen Längsnut 51 verschlossen. Jede Teil-Umfangsnut 65 weist eine zum freien Ende 64 hin gerichtete Ausnehmung 68 auf, die den Vorsprüngen 54 an der Widerlager-Ringscheibe 62 entsprechen.

Alle Zahnräder, mit Ausnahme des Abtriebs-Hohlrades 36, bestehen aus Kunststoff und sind um die Drehachse 42 oder eine hierzu parallele Achse drehbar.

Die Montage geht in der Weise vor sich, daß der Elektromotor 8 in den Aufnahmeraum 7 im Gehäuseunterteil 1 eingelegt und die Leitungen 9 durch die Öffnung 10 herausgeführt werden. Das freie Ende 13 der bereits mit der Schnecke 15 versehenen Welle 12 wird hierbei in die Lagerschale 14 eingesetzt. Zuvor oder nachher wird die Achse 46 in die Aufnahme 47 eingedrückt. Dann wird das Schneckenrad 19 des Planetengetriebes 20 auf die Achse aufgeschoben, bis es zur Anlage an der Stirnseite 49 der Aufnahme 47 kommt. Im Anschluß daran wird das Hohlrad 25 des Planetengetriebes 20 auf die Achse geschoben. Dann wird die vormontierte Einheit aus Steg-Unterteil 30, Planetenrädern 23 mit Zahnrädern 32 und Steg-Oberteil 38 derart in das Hohlrad 25 eingeschoben, daß die Außen-Verzahnungen 24 der Planetenräder 23 in Eingriff mit der Innen-Verzahnung 26 des Hohlrades 25 kommen. Danach wird das Abtriebs-Hohlrad auf die Achse 46 aufgeschoben, wobei gleichzeitig die Außen-Verzahnungen 34 der Zahnräder 32 mit der Innen-Verzahnung 35 des Abtriebs-Hohlrades 36 in Eingriff kommen. Außerdem wird die Achse 46 hierbei in der Ausnehmung 48 des Abtriebs-Hohlrades 36 aufgenommen und radial zur Drehachse 42 abgestützt. Im Anschluß daran wird das Gehäuse-Oberteil 2 auf das Gehäuse-Unterteil 1 aufgesetzt, wobei der Abtriebsabschnitt 50 durch die Lagerschale 43 hindurchgeführt wird. Die Zapfen 6 des Gehäuse-Oberteils 2 greifen hierbei in die Zentrierlöcher 5 des Gehäuse-Unterteils 1 ein und werden mit diesem, beispielsweise durch Ultraschall, verschweißt. Das Abtriebs-Hohlrad 36 ist jetzt mit seinem Lagerabschnitt 41 in der Lager-schale 43 des Gehäuse-Oberteils 2 radial gelagert. Im Anschluß daran wird der Reibring 52 der Rutsch-Kupplung 53 auf den Abtriebs-Abschnitt 50 aufgeschoben und dann das Abtriebs-Schwenkteil 56 aufgesetzt, so daß die beiden Reibflächen 58, 59 aneinanderliegen. Dann wird die Druckscheibe 61 auf den Abtriebsabschnitt 50 aufgeschoben und die Schrauben-Druckfeder 60 ebenfalls auf den Abtriebs-Abschnitt 50 aufgesetzt. Mittels der Widerlager-Ringscheibe 62 wird anschließend die Schrauben-Druckfeder 60 in Richtung zum Reibring 52 vorgespannt und die Widerlager-Ringscheibe 62 mittels des Bajonettverschlusses 63 mit dem Abtriebsanschnitt 50 verriegelt. Hierzu wird die Widerlager-Ringscheibe 62 unter Zusammendrücken der Druckfeder 60 auf das freie Ende 64 des Abtriebsabschnitts 50 aufgeschoben und nach Erreichen der Teil-Umfangsnuten 65 derart verdreht, daß die Vorsprünge 54 in diese Teil-Umfangsnuten 65 gelangen und zwar bis zu deren Anschlag am verschlossenen Ende 67. Wenn jetzt die Widerlager-Ringscheibe 62 entlastet wird, wird sie soweit in Richtung zum freien Ende 64 zurückgeschoben, bis ihre Vorsprünge 54 in den Ausnehmungen 68 zur Anlage kommen. In diesen Ausnehmungen 68 ist dann die Widerlager-Ringscheibe 62 gegenüber dem Abtriebsabschnitt 50 unverdrehbar, kann also nicht lediglich durch Drehen gelöst werden, und zwar unabhängig davon, in welcher Richtung der Abtriebsabschnitt 50 mit dem Abtriebs-Schwenkteil 56 um die Drehachse 42 verdreht wird.

Die fertig montierte Motor-Getriebe-Einheit kann mittels am Gehäuse 1, 2 ausgebildeter Befestigungsöffnungen 69 für einen entsprechenden Einsatz montiert werden. Ein solcher Einsatz erfolgt beispielsweise in Außenspiegeln von Kraftfahrzegen und zwar insbesondere in Außenspiegeln für Lastkraftwagen vorgesehen.

## Patentansprüche

1. Getriebe-Einheit
a) mit einem durch ein aus einem ersten Gehäuseteil (1) und einem zweiten Gehäuseteil (2) gebildeten Gehäuse,
b) mit einem Schneckengetriebe (16), das aufweist
- eine von einem Elektro-Motor (8) antreibbare Schnecke (15) und
- ein im ersten Gehäuseteil (1) um eine Drehache (42) drehbar gelagertes Schneckenrad (19)
c) mit einem mit dem Schneckenrad (19) in Antriebsverbindung gekoppelten konzentrisch zur Drehachse (42) angeordneten Planetengetriebe (20) und
d) mit einem mit dem Planetengetriebe (20) in Antriebsverbindung gekoppelten konzentrisch zur Drehachse (42) angeordneten, im zweiten Gehäuseteil (2) gelagerten Abtrieb (50,41,36),
e) wobei eine im wesentlichen zylindrische Achse (46) vorgesehen ist, deren erstes Ende im ersten Gehäuseteil (1) und deren zweites Ende in dem Abtrieb (50,41,36) jeweils radial zur Drehachse (42) gelagert sind, und
f) wobei das Schneckenrad (19) auf der Achse (46) frei drehbar gelagert ist,
**dadurch gekennzeichnet, daß**
g) das erste Ende der Achse (46) in einer hülsenförmigen Aufnahme (47) des ersten Gehäuseteils (1) axial und radial zur Drehachse (42) mit Preßsitz festgelegt ist,
h) der Abtrieb (50,41,36) in Axialrichtung gesehen aus einem Element (36) des Planetengetriebes (20), aus einem zylindrischen Lagerabschnitt (41) und einem Abtriebsabschnitt (50) gebildet ist, und
i) das zweite Ende der Achse (46) in dem zylindrischen Lagerabschnitt (41) gelagert ist, der in einer Lager-Schale (43) des zweiten Gehäuseteils (2) radial zur Drehachse (42) gelagert ist.

2. Getriebe-Einheit nach Anspruch 1, **dadurch gekennzeichnet**, daß die Achse (46) aus Metall, insbesondere Stahl, besteht.

3. Getriebe-Einheit nach einem der Ansprüche 1 oder 2, **dadurch gekennzeichnet**, daß das zweite Ende der Achse (46) in einer Ausnehmung (48) des zylindrischen Lagerabschnitts (41) gelagert ist.

4. Getriebe-Einheit nach einem der Ansprüche 1 bis 3, **dadurch gekennzeichnet**, daß das Element (36) des Planetengetriebes an der Lager-Schale (43) in Richtung der Drehachse (42) unverschiebbar gelagert ist.

5. Getriebe-Einheit nach einem der Ansprüche 1 bis 4, **dadurch gekennzeichnet**, daß das Element (36) des Planetengetriebes als Abtriebs-Hohlrad (36) eines mit dem Planetengetriebe (20) in Antriebsverbindung gekoppelten Hohlrad-Getriebes (33) ausgebildet ist.

6. Getriebe-Einheit nach einem der Ansprüche 1 bis 5, **dadurch gekennzeichnet,** daß die Schnecke (15) auf einer Welle (12) befestigt ist, deren von einem Elektro-Motor (8) abgewandtes freies Ende (13) in einer Lagerschale (14) des ersten Gehäuseteils (1) abgestützt ist.

## Claims

1. A drive unit comprising
a) a housing which includes a first piece (1) and a second piece (2);
b) a worm gear (16) which has
- a worm (15) drivable by an electric motor (8), and
- a worm wheel (19) mounted in the first piece (1) for rotation around a turning axis (42);
c) a planetary drive (20) which is coupled with the worm wheel (19) in driving connection concentrically of the turning axis (42); and
d) an output gear (50, 41, 36) which is mounted in the second piece (2) and coupled with the planetary drive (20) in driving connection and disposed concentrically of the turning axis (42);
e) a substantially cylindrical axle (46) being provided, the first end of which is mounted in the first piece (1) and the second end of which in the output gear (50, 41, 36) in each case radially of the turning axis (42); and
f) the worm wheel (19) being mounted freely rotatably on the axle (46);
**characterized**
g) in that the first end of the axle (46) is press fit in a sleeve-type recess (47) of the first piece (1) axially and radially of the turning axis (42);
h) in that the output gear (50, 41, 36), seen in the axial direction, is formed by an element (36) of the planetary drive (20), by a cylindrical section (41) and an output gear section (50); and
i) in that the second end of the axle (46) is mounted in the cylindrical section (41) which is supported in a bearing shell (43) of the second piece (2) radially of the turning axis (42).

2. A drive unit according to claim 1, **characterized in that** the axle (46) consists of metal, in particular of steel.

3. A drive unit according to one of claims 1 or 2, **characterized in that** the second end of the axle (46) is mounted in a recess (48) of the cylindrical section (41).

4. A drive unit according to one of claims 1 to 3, **characterized in that** the element (36) of the planetary drive is non-displaceably mounted on the bearing shell (43) in the direction of the turning axis (42).

5. A drive unit according to one of claims 1 to 4, **characterized in that** the element (36) of the planetary drive is formed as an annular output gear (36) of an annular gear drive (33) which is coupled with the planetary drive (20) in driving connection.

6. A drive unit according to one of claims 1 to 5, **characterized in that** the worm (15) is fixed on a shaft (12), the free end (13) of which that faces away from an electric motor (8) is supported in a bearing shell (14) of the first piece (1).

## Revendications

1. Unité de transmission
a) avec un carter formé d'une première partie de carter (1) et d'une deuxième partie de carter (2),
b) avec un engrenage à vis sans fin (16) qui comporte
- une vis sans fin (15) pouvant être entraînée par un moteur électrique (8) et
- une roue tangente (19) montée de manière à pouvoir tourner autour d'un axe de rotation (42) dans la première partie de carter (1),
c) avec un engrenage planétaire (20) agencé de façon concentrique par rapport à l'axe de rotation (42) et couplé en liaison d'entraînement à la roue tangente (19) et
d) avec une sortie (50, 41, 36) montée dans la deuxième partie de carter (2), agencée de façon concentrique par rapport à l'axe de rotation (42) et couplée en liaison d'entraînement à l'engrenage planétaire (20),
e) dans laquelle il est prévu un axe globalement cylindrique (46) dont la première extrémité est montée dans la première partie de carter (1) et dont la deuxième extrémité est montée dans la sortie (50, 41, 36), à chaque fois radialement par rapport à l'axe de rotation (42), et
f) dans laquelle la roue tangente (19) est montée de manière à pouvoir tourner librement sur l'axe (46),
caractérisée
g) en ce que la première extrémité de l'axe (46) est fixée dans un logement en forme de manchon (47) de la première partie de carter (1) avec ajustage serré axialement et radialement par rapport à l'axe de rotation (42),
h) en ce que la sortie (50, 41, 36) est formée, vue en direction axiale, d'un élément (36) de l'engrenage planétaire (20), d'un tronçon de palier cylindrique (41) et d'un tronçon de sortie (50), et
i) en ce que la deuxième extrémité de l'axe (46) est montée dans le tronçon de palier cylindrique (41) qui est monté dans une coquille de coussinet (43) de la deuxième partie de carter (2) radialement par rapport à l'axe de rotation (42).

2. Unité de transmission selon la revendication 1, caractérisée en ce que l'axe (46) est en métal, notamment en acier.

3. Unité de transmission selon l'une des revendications 1 ou 2, caractérisée en ce que la deuxième extrémité de l'axe (46) est montée dans un évidement (48) du tronçon de palier cylindrique (41).

4. Unité de transmission selon l'une des revendications 1 à 3, caractérisée en ce que l'élément (36) de l'engrenage planétaire est monté, fixe dans la direction de l'axe de rotation (42), sur la coquille de coussinet (43).

5. Unité de transmission selon l'une des revendications 1 à 4, caractérisée en ce que l'élément (36) de l'engrenage planétaire est conçu comme une couronne de train planétaire de sortie (36) d'une transmission à couronne (33) couplée en liaison d'entraînement à l'engrenage planétaire (20).

6. Unité de transmission selon l'une des revendications 1 à 5, caractérisée en ce que la vis sans fin (15) est fixée sur un arbre (12) dont l'extrémité libre (13) éloignée d'un moteur électrique (8) est appuyée dans une coquille de coussinet (14) de la première partie de carter (1).
